(19) Europäisches Patentamt
European Patent Office
Office européen des brevets

(11) EP 2 428 905 A1

(12) **EUROPEAN PATENT APPLICATION**

(43) Date of publication:
**14.03.2012 Bulletin 2012/11**

(51) Int Cl.:
***G06F 17/30*** *(2006.01)*

(21) Application number: **11181101.4**

(22) Date of filing: **13.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2010 JP 2010206117**

(71) Applicant: **Ricoh Company, Ltd.**
**Tokyo 143-8555 (JP)**

(72) Inventor: **Ohguro, Yoshihisa**
**Tokyo, 143-8555 (JP)**

(74) Representative: **White, Duncan Rohan**
**Marks & Clerk LLP**
**90 Long Acre**
**London**
**WC2E 9RA (GB)**

(54) **Information processing apparatus, information processing method, and computer program product for using composite data of image and text information**

(57) Provided is an information processing apparatus (100) using composite data of image data and text information as search subjects that includes a word dictionary (10); a character information extracting unit (31) that extracts and recognizes character information out of the image data; a search subject word extracting unit (32) that converts the character information into text, inserts the text into search subject data, and stores the search subject data in a database; a search text input unit (51) that receives an input of the text information; a search word extracting unit (52) that extracts word in the word dictionary (10), as search word based on the text information; and a searching unit (53) that checks the search words against the database.

FIG.2

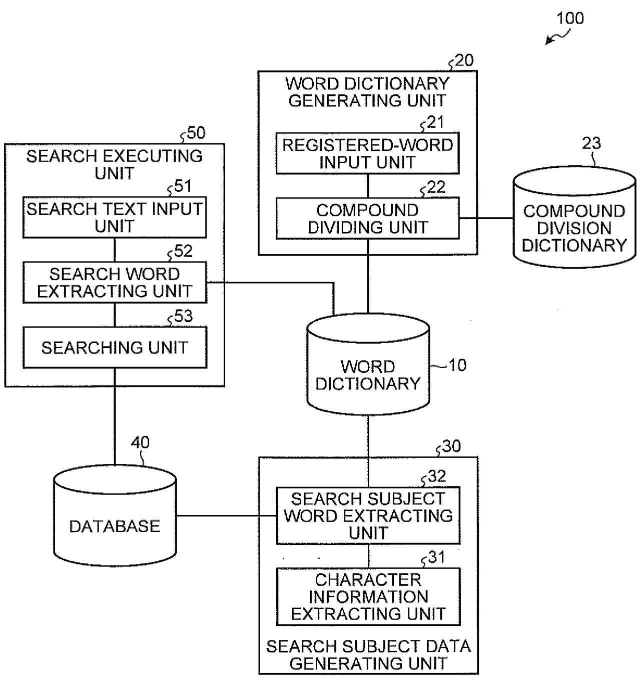


EP 2 428 905 A1

## Description

1. Field of the Invention

The present invention relates to an information processing apparatus, an information processing method, and computer program product which digitize handwritten characters included in image data so as to render the handwritten characters searchable.

2. Description of the Related Art

There are a number of known technologies for digitizing handwritten characters included in image data. For example, Japanese Patent Application Laid-open No. 2008-181485 discloses a technology for digitizing characters and the like additionally handwritten on a document together with the document. Also, for example, Japanese Patent Application Laid-open No. 08-137895 discloses a technology for dividing a compound input so as to automatically generate search keywords, as a technology for improving the accuracy of document search.

With respect to a search technology, particularly in the speech recognition field, a word spotting method is known. This technology extracts only words registered in a word dictionary from the speech of a user during speech recognition, and hence is capable of improving the accuracy and process speed of recognition (see "Word Spotting Speech Recognition", Journal of Japan Society for Fuzzy Theory, 11 (3), 403-407 (1999)). Japanese Patent Application Laid-open No. 2002-278579 discloses a technology which improves the accuracy and process speed of the voice search by applying the word spotting method to voice search. Also, Japanese Patent Application Laid-open No. 10-055371 discloses a technology which applies the word spotting method to search based on pattern matching and searches handwritten notes by the pattern matching. As a technology for dividing a compound into basic words during search or the like, morphological analysis is well known, and is applied also in Japanese Patent Application Laid-open No. 08-137895.

With the recent popularization of digital cameras, there are more opportunities to shoot a white board with written letters thereon and to use the image data of the white board as part of a minute of meetings, a memorandum, or the like. Also, frequently, comments are handwritten on letterpress printed matters; the letterpress printed matters are converted into image data with use of scanners; and the image data are electronically accumulated. Like this, image data including handwritten characters tend to increase, and with an increase in the accumulated amount, requests for searching handwritten contents increases.

Specifically, in many of situations in which handwritten characters are used, since fragments of sentences such as words and phrases rather than one grammatically complete sentence are used, and only important keywords and phrases in addition to handwritten drawings are merely handwritten, and the texts do not constitute a complete piece of information but are often accumulated without being subjected to appropriate classification and arrangement. For this reason, if handwritten characters on the handwritten documents are digitized (converted into texts), it becomes easy to extract portions including desired search words of users, even from a large amount of unarranged handwritten documents, and thus it becomes easy to efficiently use the handwritten documents.

When handwritten characters in image data are converted into texts so as to be subjects of general text search, it is required to improve the accuracy of handwritten character recognition and the accuracy and the process speed of search. Particularly, since handwritten characters has high individuality and are variously modified, as compared to print, in the current handwritten-character recognition technology, the accuracy of recognition is low as compared to the printed-character recognition. For this reason, in order to improve the satisfaction of a user, it is required to improve the accuracy of recognition and the accuracy and the process speed of search.

## SUMMARY OF THE INVENTION

It is an object of the present invention to at least partially solve the problems in the conventional technology.

According to an aspect of the present invention, there is provided an information processing apparatus using composite data of image data and text information as search subjects, the text information being obtained by converting character information, which is originally image data included in the image data, into texts, and the composite data being obtained by combining the texts, which are converted, with the image data, the apparatus comprising: a word dictionary that stores a plurality of words; a character information extracting unit that extracts and recognizes character information out of the image data; a search subject word extracting unit that converts the character information, which is recognized and which corresponds to the word stored in the word dictionary, into text, inserts the text, which is converted, into search subject data, and stores the search subject data in a database; a search text input unit that receives an input of the text information which is a search target; a search word extracting unit that extracts word, which is included in the word dictionary, as search word based on the text information which is the search target; and a searching unit that checks the search words against the database.

According to another aspect of the present invention, there is provided an information processing method using composite data of image data and text information as search subjects, the text information being obtained by converting character information, which is originally image data included in the image data, into texts, and the composite data being obtained by combining the texts, which are converted, with the image data, the method comprising: extracting character information out of the image data and recognizing the character information that is extracted; extracting search subject data, which includes converting the character information, which is recognized and which corresponds to a word that is stored in a word dictionary that stores a plurality of words therein, into text, inserting the text, which is converted, into the search subject data, and storing the search subject data in a database; extracting a search word, which includes extracting word, which is included in the word dictionary, as search word based on the text information which is the search target; and checking the search words against the database.

According to still another aspect of the present invention, there is provided a computer program product comprising a non-transitory computer-usable medium having computer-readable program codes embodied in the medium for processing information in an information processing apparatus, using composite data of image data and text information as search subjects, the text information being obtained by converting character information, which is originally image data included in the image data, into texts, and the composite data being obtained by combining the texts, which are converted, with the image data, the program codes when executed causing a computer to execute: extracting character information out of the image data and recognizing the character information that is extracted; extracting search subject data, which includes converting the character information, which is recognized and which corresponds to a word that is stored in a word dictionary that stores a plurality of words therein, into text, inserting the text, which is converted, into the search subject data, and storing the search subject data in a database; extracting a search word, which includes extracting word, which is included in the word dictionary, as search word based on the text information which is the search target; and checking the search words against the database.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a block diagram illustrating a hardware configuration of an information processing apparatus according to an embodiment;

Fig. 2 is a block diagram illustrating a functional configuration of the information processing apparatus according to the embodiment;

Fig. 3 is a flow chart of a word dictionary generating process according to the embodiment;

Fig. 4 is a diagram illustrating an example of a configuration of search subject data according to the embodiment;

Fig. 5 is a diagram for explaining character recognition according to the embodiment;

Fig. 6 is another diagram for explaining the character recognition according to the embodiment;

Fig. 7 is a flow chart of a search subject data generating process according to the embodiment;

Fig. 8 is a diagram illustrating an example of a handwritten character row included in image data according to the embodiment;

Fig. 9 is a diagram illustrating an example of a result of character recognition in units of one character according to the embodiment;

Fig. 10 is a diagram illustrating an example of a result of character recognition in word units according to the embodiment;

Fig. 11 is a flow chart of a search executing process according to the embodiment;

Fig. 12 is a diagram illustrating an example of a method of defining a check range of a word dictionary according to the embodiment;

Fig. 13 is a diagram illustrating an example in which extraction results including equivocal search subject words are inserted according to the embodiment;

Fig. 14 is a diagram illustrating a position of a search subject word according to the embodiment;

Fig. 15 is a diagram illustrating an example of search subject data of a search result according to the embodiment;

Fig. 16 is a diagram illustrating an example of search subject data of a search result according to the embodiment;

Fig. 17 is a diagram for explaining an order in which search results are presented according to the embodiment;

Fig. 18 is a diagram for explaining an order in which search results are presented according to the embodiment; and

Fig. 19 is a diagram illustrating an example in which information processing apparatuses according to the embodiment of the present invention are configured on a network.

DETAILED DESCRIPTION OF THE PREFERRED EMBODIMENTS

Hereinafter, embodiments of will be described with reference to the drawings. However, the present invention is not limited to the embodiments.

An information processing apparatus according to an embodiment recognizes a plurality of handwritten characters (character information) included in image data; converts the recognized characters into texts; and inserts the texts of the character information to positions corresponding to the character information of the image data, thereby making it possible to make composite data of an image and the texts of the character information as search subject data, and to search the texts included in the search subject data.

Fig. 1 is a block diagram illustrating a hardware configuration of an information processing apparatus 100 according to an embodiment. The information processing apparatus is configured to include a CPU 1, a memory 2, a hard disk 3, a keyboard 4, a display 5, a CD-ROM drive 6, an FD drive 7, and a communication device 8. The CPU 1 controls the entire information processing apparatus 100; and the memory 2 stores a program for actuating the CPU 1. The hard disk 3 stores image data read by a scanner (not shown). The keyboard 4 receives various inputs by a user of the information processing apparatus 100 or the like. The display 5 displays an input status and the like. The CD-ROM drive 6 and the FD drive 7 input programs for performing the present invention stored in a CD-ROM and an FD. The communication device 8 transmits and receives data through communication lines.

Fig. 2 is a block diagram illustrating a functional configuration of the information processing apparatus 100 according to the embodiment. The information processing apparatus 100 according to the present embodiment is configured to include a word dictionary 10, a word dictionary generating unit 20, a compound division dictionary 23, a search subject data generating unit 30, a database 40, and a search executing unit 50. The word dictionary generating unit 20 is configured to include a registered-word input unit 21 and a compound dividing unit 22; the search subject data generating unit 30 is configured to include a character information extracting unit 31 and a search subject word extracting unit 32; and the search executing unit 50 is configured to include a search text input unit 51, a search word extracting unit 52, and a searching unit 53.

In the information processing apparatus 100, the CPU 1 operates according to a program installed in the memory 2, thereby implementing each unit of the character information extracting unit 31, the search subject data extracting unit 32, the search word extracting unit 52, the searching unit 53, and the compound dividing unit 22. Also, the word dictionary 10 and the compound division dictionary 23 are set up in the hard disk 3 or the like, and the search text input unit 51 and the registered-word input unit 21 are implemented at the keyboard 4. And, by the functions of the individual units, a word dictionary generating process, a search subject data generating process, and a searching process are performed as described below.

In the present embodiment, the information processing apparatus 100 extracts search subject words to be search subjects by applying the known word spotting method to a recognized character string. That is, the character string is checked against the word dictionary for word spotting, and words included in the word dictionary are extracted from the character string.

Prior to a search subject data generating process of the search subject data generating unit 30 and a searching process of the search executing unit 50 according to the embodiment, first, a procedure of a word dictionary generating process in which the word dictionary generating unit 20 generates the word dictionary 10 will be described with reference to a flow chart of Fig. 3. Here, the generated word dictionary 10 corresponds to the word dictionary checked when the word spotting method is performed, and is used commonly in the search subject data generating process and the searching process (to be described below).

When the word spotting method is applied to the recognized character string, the character string is checked against the word dictionary 10 while a check start position of the character string is shifted by one character and a length of a check range of the character string is changed one by one. Therefore, as the check range is lengthened or the number of words registered in the word dictionary 10 increases, the amount of computation required for the checking increases.

The length of the check range depends on the length of the character string which is the check subject, and the lengths of words registered in the word dictionary 10. In the present embodiment, since it is not preferable to limit the length of the character string, the lengths of words registered in the word dictionary 10 are reduced so as to suppress the amount of computation required for the checking.

If the words registered in the word dictionary 10 include compounds, the words are generally lengthened. Also, since countless compounds are coined by combinations of basic words, the number of registered words also increases. For this reason, in the present embodiment, compounds are divided into basic words by a known morphological analysis, and the basic words are registered in the word dictionary 10. In other words, in a case where there is a word which a user wants to register (wants to make as a search subject) (Yes in step S101), and if the user inputs the corresponding word through the registered-word input unit 21 in step S102, the compound dividing unit 22 divides the input compound into words with reference to the compound division dictionary 23 (which is a dictionary for morphological analysis) in step S103, and outputs the words. In step S104, each of the output words is checked against the word dictionary 10. If the corresponding output word has not been registered (No in step s104), it is to be registered in the word dictionary 10 in step S105. Meanwhile, if the corresponding output word has already been registered (Yes in step S104), the procedure proceeds to step S101, without registering the corresponding output word in the word dictionary 10.

For example, if a compound 'travel agency person' is input from the registered-word input unit 21, the compound is divided into words 'travel', 'agency', and 'person' by the morphological analysis, and if each of the words 'travel', 'agency', and 'person' has not been registered in the word dictionary 10, these corresponding words are registered. Thereafter, in a case where a compound 'agency person' is input, even when this compound is divided into words 'agency' and 'person' by the morphological analysis, since both of the words 'agency' and 'person' have already been registered in the word dictionary 10, they are not newly registered.

Similarly, even in a case where the user inputs a plurality of compounds, such as 'travel', 'travel agency', 'travel agency business', 'travel agency person', and 'travel agency industry', words to be registered in the word dictionary 10 can be limited to words 'travel', 'agency', 'industry', and 'person'. By doing this, it is possible to reduce the lengths of words to be registered in the word dictionary 10 and to suppress the number of words to be registered. When a word is registered in the word dictionary 10, grammatical information such as parts of speech may be registered with the word.

Next, a procedure of the search subject data generating process according to the present embodiment will be described with reference to Figs. 4 to 7. By the search subject data generating process, the handwritten characters (character information) included in the image data are converted into the texts (test data), thereby generating data to be subjects of searching in the searching process by the search executing unit 50, which is to be described below.

In the present embodiment, search subject data is an electronic document having a multi-layered structure in which image data including handwritten characters (an image layer) and PDF (an information addition layer) including texts into which the handwritten characters have been converted are superimposed in layers as shown in Fig. 4. The texts of the PDF of the information addition layer are disposed with a transparent color directly on the handwritten characters of the original image data. Therefore, the search subject data of the present embodiment is obtained by integrating the original image data with the texts of the handwritten characters without changing the appearance of the original image data. In the searching process to be described below, the transparent text PDF, which is the information addition layer, is a search subject.

In the present embodiment, the search subject data is not limited to the PDF, but may be general electronic documents having the multi-layered structure. Also, the multi-layered structure is not limited to a structure composed of multiple layers, but includes a structure in which document element groups can be separated and superimposed in layers.

Then, in the present embodiment, words (search subject words) desired to be search subjects are extracted as the search subject data by applying the known word spotting method. Since the handwritten characters have high individuality and are variously modified, being compared with printed words, it is difficult to accurately recognize the handwritten characters in units of one character. For example, as shown in Fig. 5, the handwritten characters come in various shapes; and particularly, characters which are similar in shape are likely to be falsely recognized. Examples for this are, as shown, character 501 ('sima' which is Japanese meaning an island) and characters 502 and 503 ('tori' each of which is Japanese meaning a bird); and characters 504 and 505 ('wa' each of which is a Japanese meaning a sum) and character 'ri' (which is a Japanese meaning a profit). That is, characters 506 ('Kagoshima' which is the name of a prefecture in Japan) may be falsely recognized as 'kagodori'; or characters 507 ('toritori') may be falsely recognized as characters 508 ('Tottori'); or character 509 ('Wakayama' which is a prefecture in Japan) may be falsely recognized as characters 510 ('rikayama'). Also, as exemplified in Fig. 6, in a case where characters are not spaced properly, accurate character recognition is hardly achieved in units of one character, when depending in recognition on only the features of the shapes of the characters; because a character 601 may be divided into characters 602 and 603; or a character 605 may be divided into characters 606 and 607; or a character 610 may be divided into characters 611 and 612. Therefore, the accuracy in recognition of handwritten characters is very low.

Meanwhile, if the word spotting method is applied, since character recognition is performed in units of one character by using the word dictionary, it becomes unnecessary to consider character combinations which cannot appear as words, and since determination based on the shape features is possible within a wider range than that in the character recognition in units of one character, the accuracy of character recognition is improved.

Fig. 7 is a flow chart illustrating a procedure of the search subject data generating process of the search subject data generating unit 30. As shown in this flow chart, in step S201, the character information extracting unit 31 recognizes the character information of the image data by a known OCR function. Then, in step S202, the search subject word extracting unit 32 checks the recognized character string against the word dictionary 10; extracts the words from the recognized character string if the words have been registered in the word dictionary 10; and converts the words into the texts. In step S203, the search subject word extracting unit 32 inserts the texts, into which the words extracted as the search subject words have been converted, with a transparent color into the PDF, and associates the PDF with the original image data, thereby generating the search subject data. In step S204, the search subject word extracting unit 32 stores the search subject data in the database 40.

The method of extracting the words from the recognized character string by applying the word spotting method will be described in detail with reference to Figs. 8 to 10. A handwritten character image 801 shown in Fig. 8 is first recognized in units of one character. In other words, positions (cut positions) likely to be the spacing between characters in a handwritten character row are determined and the result of recognition of each character is output. At this time, as shown in Fig. 9, with respect to an ambiguous recognition result, a plurality of candidates 901, 902, and 903 are output.

Next, when the word dictionary 10 is checked, and if there are words registered in the word dictionary 10 as shown in Fig. 10, the existence range of each word (the start position to the end position of each word) is output as an extraction result. The extraction result is output in a data format called a word lattice. According to the word lattice format, the extraction result is expressed as (Start Position, End Position, Word Notation, Likelihood value). For example, a word 1001 ('koukateki' which is Japanese meaning 'effective') of Fig. 10 is output as (12, 14, the image of the word 1001, 96).

The recognition result for each character has the likelihood of the recognition as a score. On the basis of this score, the recognition order of the plurality of candidates 901, 902, and 903 is computed as shown in Fig. 9. The shape of each character is expressed as a pair of numerical values in a feature amount; and a standard feature amount vector of the character shape is determined by regarding the pair of numerical values as a vector. The standard feature amount vector is prepared for every kind of recognition subject characters, thereby generating a standard pattern dictionary. With respect to each character, inter-vector distances between the feature amount vectors included in the standard pattern dictionary and the feature amount vectors of the characters of the recognition subject image are calculated; and a character, which the closest standard pattern to the feature amount of the character of the recognition subject image represents, is determined as the recognition result of the subject image. As the likelihood of recognition of each character obtained in this process, a value based on the minimum inter-vector distance can be used.

In general, since a plurality of recognition candidates are obtained with respect to the same image, in a case where the recognition candidates are checked against the word dictionary so as to obtain word candidates, a false recognition result of one character may be combined, resulting in extracting an incorrect word. In cases of short words, when a false recognition result of one character is inserted into the recognition results, the recognition results are likely to be accidentally matched with words stored in the word dictionary. For example, in a case of a two-character word 'ryo-kou' (which is Japanese meaning travel), if a false recognition result 'ryu' is inserted as a recognition result corresponding to the first character 'ryo', the false recognition result of the two-character word 'ryokou' is matched with a word 'ryu-kou' (which is Japanese meaning a trend) in the word dictionary. Meanwhile, in a case a six-character word 'ko-n-pyu-ta' (which is Japanese meaning a computer), the word includes characters 'n', 'pyu', and 'ta' which are likely to be falsely recognized as other Japanese characters 'so', 'byu', and 'yuu' which is the first character of 'yuu-kata' which is Japanese meaning evening) similar in shape, and it is likely that a plurality of candidates will be obtained as the recognition result of each character of the three characters. However, even when candidate characters including recognition errors are combined, it is unlikely that a 6-character word other than the word 'ko-n-pyu-ta' will be generated. In other words, only false recognition may not cause an incorrect word to be extracted; but only when a character string composed of a combination including a falsely recognized character is accidentally stored in the word dictionary, an incorrect word is extracted. When the number of characters of a word character string is large, as long as accidents, in which an error of the result of recognition in units of one character is matched with another word character string, do not happen at the same time, an incorrect word is not to be extracted. In other words, if the number of characters of an extracted word character string is large, the result may be relied on.

From the above-mentioned result, it can be said that it is preferable that the likelihood of the word lattice (the extraction result of the word) should reflect the recognition result score of each character and the length of the extracted word string. Therefore, the likelihood of the word lattice (the extraction result of the word) can be expressed as f(Recognition Result Scores of every Character, Length of Extracted Word String). Here, f() is a function which represents a better value as the recognition result scores of every character are better, and as the length of the extracted word string is shorter. As a function satisfying the above-mentioned characteristic, for example, the following Equations (1) and (2) can be considered. Here, x represents (a set of) the recognition result scores of each character, and is set to a more probable positive number as the value increases. Also, y is set to a positive number representing the length of the extracted word string, and a is set to a positive constant number. All of the above-mentioned computation examples are design matters when the present embodiment is realized, and during implementation, a function having the above-mentioned tendency may be appropriately designed.

$$f(x,y) = \sum x + a \times y \quad (1)$$

Here, a bonus point based on the character string check is added to the sum of the recognition scores of every character.

$$f(x,y) = \sum x + \sqrt{y} \qquad (2)$$

Here, the sum of the recognition scores of every character is multiplied by a coefficient based on the character string check.

Next, checking the recognition result against the word dictionary 10 will be described in detail with reference to an example of Fig. 9. In Fig. 9, the results of recognition in units of one character are checked against the word dictionary 10; and matched words and the positions of the matched words are extracted. While the character cutout position is shifted one by one and the length of the check range is changed one by one, it is checked whether words included in the word dictionary 10 exist or not. Given, for example, in a case where words 'totomoni' 1002 (which is Japanese meaning 'together with'), 'tomoni' (which is Japanese meaning 'together'), 'yori' 1004 (which is Japanese meaning 'than'), 'kouka' 1005 (which is Japanese meaning 'an effect'), 'mato' 1006 (which is Japanese meaning 'a target'), 'sa-you' 1007 (which is Japanese meaning 'an action'), and 'koukateki' 1001 have been registered in the word dictionary 10. In the one-character recognition result of the character cutout position No. 17, Rank 1 is 'tsu-ki' 904, and Rank 2 is 'you' 905. However, the 'you' 905 can be combined with the left, next character 'saku' 906 to the 'you' 905, such that the word 'sayou' 906 and 905 (equal to 1007) can be extracted.

Meanwhile, the characters in the character cutout position Nos. 05 to 09, 15, and 18 to 20 of Fig. 9 are in the handwritten character image, but words matched with combinations of the characters do not exist in the word dictionary 10, so that any output is not performed. In this way, the words 'totomoni' 1002, 'tomoni' 1003, 'yori' 1004, 'kouka' 1005, 'mato' 1006, 'sayou' 1007, and 'koukateki' 1001 are output together with the existence ranges thereof in the above-mentioned word lattice format.

Next, a procedure of the searching process by the search executing unit 50 according to the present embodiment will be described with reference to a flow chart of Fig. 11. If the user inputs words, which the user wants to set as a search keyword, as text information through the search text input unit 51 in step S301, then in step S302, the search word extracting unit 52 checks the input text information against the word dictionary 10 and extracts words, which have been registered in the word dictionary 10, from the input search text information. Then, in step S303, the searching unit 53 checks the extracted words as the search words against the database 40 and searches the text information in the information addition layer of the search subject data. If there are words corresponding to the search words, in step S304, search subject data including the corresponding words is to be output in an appropriate format onto the display 5.

For example, in a case where a word 'ryokou dairiten' 1301 (which is Japanese meaning a travel agency) is input as the text information which is a search target, words 'ryokou' 1302, 'dairi' 1303 (which is Japanese meaning 'acting for', and 'ten' 1304 (which is Japanese meaning an office) are extracted as the search words, and search subject data including the words 'ryokou' 1302, 'dairi' 1303, and 'ten' 1304 are output. In this case, not only search subject data including words corresponding to search words composed of compounds consisting of two or more of the words 'ryokou' 1302, 'dairi' 1303, and 'ten' 1304, but also search subject data partially corresponding to the search words, such as search subject data including any one of the three words 'ryokou' 1302, 'dairi' 1303, and 'ten' 1304, and search subject data including the three words 'ryokou' 1302, 'dairi' 1303, and 'ten' 1304 although the three words do not neighbor each other, are output. Therefore, the possibility that the results satisfy the potential demands of the user can increase.

In the procedure of the searching process, the search word extracting unit 52 is intended to divide compounds into basic words so as to obtain the search words, and may refer to the general compound division dictionary 23 (a dictionary for morphological analysis), in which a number of words has been registered, under normal circumstances. Meanwhile, in the word dictionary 10, only words which the user wishes to search for from the image data are registered by the word dictionary registration procedure described above. Therefore, in the present embodiment, when the search word extracting unit 52 extracts the search words, the word dictionary 10 is referred to, in which the amount of computation during compound division is reduced; it is possible to prevent incorrespondence between the search words and the search subject words; and the efficiency of searching is improved.

The word dictionary 10 used when the search subject data is generated and the word dictionary 10 used when the search word is extracted from the text information input during searching can be generated in common, so that it is possible to implement both of the digitization and search of handwritten characters with a high degree of accuracy without causing an increase in the amount of computation. Therefore, it is possible to remarkably improve the efficiency of search for the image data including the handwritten characters and to effectively use the image data including the handwritten characters.

When the word spotting method is applied in the procedure of the search subject data generating process described above, in order to efficiently check the recognized character string against the word dictionary 10, a length of a range checked against the word dictionary 10 is restricted according to the size of the handwritten characters in the image data. That is, the handwritten characters depend on persons, and have a tendency in which the length of a word is determined by the height of characters. For this reason, when the handwritten characters are extracted and recognized from the image data, the height of the characters is measured and the length of the check range is defined on the basis of the height of the characters. The length of a word tends to change according to the kind of characters and the number of characters. For this reason, as shown in Fig. 12, the length of the check range is defined for each word registered in the word dictionary 10. That is, if the measured height of characters is multiplied by a check length coefficient, an estimated length when the characters of the corresponding word are handwritten can be limited. Also, since the handwritten characters are different from individual to individual, an upper limit and a lower limit are provided to a length of a range.

As described above, since the length of the word to be checked is limited by limiting the length of the check range of the character string checked against the word dictionary 10 during the application of the word spotting method, it is possible to suppress the number of checked words and to reduce the amount of computation required for the checking. The length of the check range may be calculated from the word notation whenever checking is performed. According to this method, the capacity of the word dictionary 10 can also be advantageously suppressed.

In the word dictionary generating procedure and the search subject data generating procedure described above, in a case where words, which the user wishes to extract as the search subject words from the image data, increases in number in the word dictionary generating procedure, the corresponding words are registered in the word dictionary 10. Besides, it is necessary to add the corresponding words as the search subject words to the search subject data. For this reason, in a case where a word has been additionally registered in the word dictionary 10, following this registration process, the search subject data generating procedure may preferably be automatically performed only on the corresponding word, so as to perform a process of adding the corresponding word as a search subject word to the search subject data. In this way, the corresponding word is automatically added to the search subject data in synchronization with the additional registration of the word in the word dictionary 10, so that incorrespondence between the word dictionary 10 and the search subject words of the search subject data does not likely occur. Therefore, it is possible to prevent missing out of search.

In the searching process described above, in a case where the text information, which is the input search target, includes a word which is not included in the word dictionary 10, the corresponding word may be additionally registered in the word dictionary 10, and, following this registration process, the search subject data generating procedure may be automatically performed only on the corresponding word, so as to perform a process of adding the corresponding word as a search subject word to the search subject data.

For example, in a case where four words 'ryokou' 1501, 'dairi' 1502, 'ten' 1503, and 'happyou' 1504 (which is Japanese meaning publication) have been registered in the word dictionary 10, if the user inputs text information of 'ryokou dairiten ranking happyou' 1500 (which is Japanese meaning travel agency ranking publication), the word 'ranking' 1505 is not included in the search words. Therefore, it is not determined whether the word 'ranking' 1505 is included or not. Accordingly, even when search subject data presented as the search result includes words completely corresponding to the text information of 'ryokou dairiten ranking hapyou' 1500, the corresponding words are not identified. For this reason, the word 'ranking' 1505, which is included in the text information input by the user but has not been registered in the word dictionary 10, is registered in the word dictionary 10; and the search subject data generating procedure is performed on the word 'ranking' 1505 so as to perform the process of adding the word 'ranking' 1505 as a search subject word to the search subject data.

In this way, a word which the user potentially (subconsciously) wishes to add to the search subject words is additionally registered in the word dictionary 10; and the corresponding word is automatically added to the search subject data, so that the probability to present search results which the user desires is high, and incorrespondence between the word dictionary 10 and the search subject words of the search subject data does not likely occur. Therefore, it is possible to prevent missing out of search.

In the search subject data generating process described above, since the character recognition accuracy of handwritten characters is not high, even when recognition are performed in word units by applying the word spotting method, in some cases including a case where a plurality of words similar in shape have been registered in the word dictionary 10, false character recognition may be made. For example, in a case where words 'ryokou' and 'ryukou' have been registered together in the word dictionary 10, since the two words are similar in shape of the Japanese characters 'ryo' and 'ryu' and are common in the character 'kou', it can be said that the two words are similar to each other in shape. Therefore, according to the automatic process of the information processing apparatus like the present embodiment, it is difficult to output the words 'ryokou' and 'ryukou' distinctively from each other, unlike humans being capable of understanding the words in the context.

For this reason, in the search subject data generating process of the present embodiment, in a case where a plurality of extraction results having a predetermined or higher level of likelihood are output with respect to the same handwritten-character positional range, the plurality of search subject words may be redundantly inserted into the search subject data with remaining ambiguity, without determining any one among them. For example, as shown in Fig. 13, the plurality of extraction results are superimposed as transparent color texts on the information addition layer to be disposed directly on the handwritten character images. Since the plurality of extraction results are transparent color texts, the plurality of extraction results do not harm the readability of the user's handwritten characters in the image data.

If the plurality of search subject words are redundantly inserted like that, even in the searching process using the word dictionary 10 based on the automatic process, at least missing out of search can be prevented. Even in a case where the word 'ryukou' 1305 is input as a search word, search subject data of a handwritten word 'ryokou' 1305 may be extracted. However, if a plurality of search words are designated, it is prevented that all of the extracted search subject data do not correspond to the desired search word of the user. This process is preferable for the following reason: If excessively selected search results are output, it shall be sufficient to for a user to see the image data and turn down some of the data; whereas if missing out of search occurs, there is no way to compensate the missing out of search.

Also, in the search subject data generating process and the searching process described above, as the number of words registered in the word dictionary 10 increases, the amount of computation for the checking increases; and the number of words similar in shape also increases so that the ambiguity increases in the word extraction results. For this reason, the number of words to be registered in the word dictionary 10 may be appropriately suppressed, thereby reducing the time to process and improving the accuracy of the word extraction. Accordingly, in the present embodiment, a plurality of word dictionaries 10 may be provided for each field of use and for each user, so that the user can use a desired word dictionary 10 through switching thereof.

As the word dictionaries 10, for example, a dictionary in which computer-related technical terms have been registered, a dictionary in which law-related technical terms have been registered, a user dictionary for a specific user, and the like are provided so as to enable the user to select a desired word dictionary 10 through an input unit such as the keyboard 4. In this case, for example, if it is known in advance that the search subject data are a computer-related character image, the dictionary, in which the computer-related technical terms have been registered, may be selected by switching, thereby reducing the process time and improving the accuracy of the word extraction.

In a case where a plurality of word dictionaries 10 can be used by switching as described above, in the above-mentioned search subject data generating process, information for identification of the word dictionary 10 with which each search subject word of the search subject data has been extracted is added to the corresponding search subject word. In a case where switching to a word dictionary 10 has been performed, the identification information of the switched word dictionary 10 is added to the search subject data, thereby completing the word extraction based on the corresponding word dictionary 10. Therefore, it is unnecessary to repeat the search subject data generating process. Meanwhile, when switching to a word dictionary 10 has been performed, in a case where the search subject data does not have the identification information of the switched word dictionary 10 added thereto, the search subject data generating process based on the corresponding word dictionary 10 is repeated.

This process can also be applied not only to a case where switching to a word dictionary 10 has been performed but also to a case where image data including handwritten characters are additionally and newly registered as search subject data to the database 40. That is, when it is confirmed that the identification information of a word dictionary 10 to be used has not been added, the search subject data generating process is performed.

Moreover, in the above-mentioned searching process, the presentation order of search results may be determined on the basis of the positions (existence position) of the search subject words in the search subject data. In other words, search subject data, in which the number of search subject words corresponding to the plurality of search words included in the text information which is the search target input by the user is large and the positions on the image data are concentrated in a small range, can be considered as search subject data satisfying the demand of the user (having a high degree of correspondence with the text information input by the user). Therefore, the search results are presented in descending order of the number of search subject words, corresponding to the search words, included in the search subject data. Also, in a case where the numbers of search words are equal, the search results are presented in ascending order of the size of the range of the positions of the search subject words.

Hereinafter, a method of determining the presentation order of the search results will be described by using specific examples shown in Figs. 14 to 18. First, the positions (existence positions) of the search words on the image data are directly on the positions of handwritten characters, and can be represented as rectangular coordinates as shown in Fig. 14.

Figs. 15 to 18 show examples of search subject data extracted as the search result when five words 'ryokou' 1501, 'dairi' 1502, 'ten' 1503, 'ranking' 1505, and 'happyou' 1504 are included in the text information which is the search target input by the user. Comparing Figs. 15 and 16, since five search subject words are included as shown in both Figures, the presentation order is not determined by the number of search subject words. Meanwhile, comparing the existence positions of the five search subject words on the images, the search subject words are concentrated in a smaller range in Fig. 15 than in Fig. 16. Therefore, it is determined that the search result of Fig. 15 better satisfies the demand of the user, and the search result of Fig. 15 is first presented.

As for the degree of concentration of the existence positions of the plurality of search subject words, a circumscribed rectangle including all of the search subject words is obtained; and if the area of the circumscribed rectangle is small, it is determined that the degree of the concentration is high. Rectangles shown by thick dashed lines 1700 and 1800 in Figs. 17 and 18 are circumscribed rectangles regarding the search results of Figs. 15 and 16, respectively; and it can be seen that the one 1700 shown in Fig. 17 is smaller in the area. Therefore, even on the basis of the areas of the circumscribed rectangles, it can be seen that it is possible to determine that the search result of Fig. 15 better satisfies the demand of the user.

In a coordinate system with the origin at the top left, the method of obtaining the circumscribed rectangles and the method of computing the areas of the circumscribed rectangles can be defined as follows. That is, in a case where n-number of search subject words of the search subject data correspond to the search words, the existence range is defined as follows.

(Xs_i, Ys_i) - (Xe_i, Ye_i) (where i is 1 and n)

Also, the coordinates of the circumscribed rectangle including all of the rectangles can be calculated as follows.

(Min(Xs_i), Min(Ys_i)) - (Max(Xe_i), Max(Ye_i))

The width W and height H of the circumscribed rectangle can be expressed as follow.

W = Min(Xs_i) - Min(Ys_i)

H = Max(Xe_i) - Max(Ye_i)

Further, the area S of the circumscribed rectangle can be expressed.

S=WxH

How large the area S is becomes a measure of the degree of concentration of the search subject words corresponding to the search words. Actually, since the area changes according to the character sizes, in order to eliminate the influence of the character sizes, the character sizes included in the circumscribed rectangle are averaged; and the area is normalized by using the average value. An average Pav of character heights can be used as a substitute for the average of the character sizes, and the normalized width Wav and height Hav of the circumscribed rectangle can be expressed as follow.

Wav = W/Pav

Hav = H/Pav

Therefore, the normalized area can be calculated as follows.

Sav = Wav x Hav

As for the degree of correspondence between the text information, which is the search target input by the user, and the search subject data, a measure of known keyword proximity in Internet search may be used.

In order to perform the information processing method of each practical example described above, the process procedure may be written as a computer program; and the program may be recorded in an arbitrary recording medium such as a CD-ROM and an FD, and be read in the computer of the information processing apparatus 100. Also, the implementation is also possible by reading the program in computers of information processing apparatuses 100, 200, and 300 disposed on a network, through communication lines such as the Internet shown in Fig. 19.

According to the present embodiment, the word dictionary used when search subject data are generated and the word dictionary used when the search words are extracted from the text information input during searching can be integrated, so that it is possible to implement both of the digitization and search of handwritten characters with a high degree of accuracy without causing an increase in the amount of calculation. Therefore, it is possible to remarkably improve the efficiency of search of the image data including the handwritten characters and to effectively use the image data including the handwritten characters.

The present embodiment has been made in consideration of the foregoing circumstances, and the present embodiment is to provide an information processing apparatus, an information processing method, and an information processing program which extract handwritten characters in image data with a high degree of accuracy, convert the handwritten characters into texts to be search subject data, and search the search subject data with a high degree of accuracy.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

**1.** An information processing apparatus (100) using composite data of image data and text information as search subjects,
the text information being obtained by converting character information, which is originally image data included in the image data, into texts, and
the composite data being obtained by combining the texts, which are converted, with the image data, the apparatus comprising:

a word dictionary (10) that stores a plurality of words;

a character information extracting unit (31) that extracts and recognizes character information out of the image data;
a search subject word extracting unit (32) that
converts the character information, which is recognized and which corresponds to the word stored in the word dictionary (10), into text,
inserts the text, which is converted, into search subject data, and stores the search subject data in a database;
a search text input unit (51) that receives an input of the text information which is a search target;
a search word extracting unit (52) that extracts word, which is included in the word dictionary (10), as search word based on the text information which is the search target; and
a searching unit (53) that checks the search words against the database.

**2.** The information processing apparatus (100) according to claim 1, wherein
a check range of a portion corresponding to the character information of the image data is speculated, for each word stored in the word dictionary (10).

**3.** The information processing apparatus (100) according to claim 1, wherein
the character information extracting unit (31), when a word is additionally registered in the word dictionary (10), adds the corresponding word into the search subject data in synchronization with the registration.

**4.** The information processing apparatus (100) according to claim 3, wherein
the character information extracting unit (31), when a word which has not been stored in the word dictionary (10) is input from the search text input unit (51), additionally registers the corresponding word into the word dictionary (10).

**5.** The information processing apparatus (100) according to claim 1, wherein
with respect to each of a plurality of extracted words, the search subject word extracting unit (32)
calculates likelihood on whether each of the extracted words corresponds to the text information which is extracted by the character information extracting unit (31), and
inserts a plurality of the text information into a corresponding position in the image data, when the likelihood is ambiguous.

**6.** The information processing apparatus (100) according to claim 1, wherein
the word dictionary (10) is provided in plural, and a user selects and uses any one of the plurality of word dictionaries.

**7.** The information processing apparatus (100) according to claim 6, wherein
when a word is inserted into the search subject data, the search subject word extracting unit (32) adds information specifying the checked word dictionary (10) to the corresponding word.

**8.** The information processing apparatus (100) according to claim 1, wherein
the searching unit (53) presents search results in an order defined by a degree of correspondence between the text information which is the search target and the search subject data.

**9.** An information processing method using composite data of image data and text information as search subjects,
the text information being obtained by converting character information, which is originally image data included in the image data, into texts, and
the composite data being obtained by combining the texts, which are converted, with the image data, the method comprising:

extracting character information out of the image data and recognizing the character information that is extracted;
extracting search subject data, which includes
converting the character information, which is recognized and which corresponds to a word that is stored in a word dictionary (10) that stores a plurality of words therein, into text,
inserting the text, which is converted, into the search subject data, and storing the search subject data in a database;
extracting a search word, which includes
extracting word, which is included in the word dictionary (10), as search word based on the text information which is the search target; and
checking the search words against the database.

**10.** A computer program product comprising a non-transitory computer-usable medium having computer-readable program codes embodied in the medium for processing information in an information processing apparatus (100), using composite data of image data and text information as search subjects,
the text information being obtained by converting character information, which is originally image data included in the image data, into texts, and
the composite data being obtained by combining the texts, which are converted, with the image data, the program codes when executed causing a computer to execute:

extracting character information out of the image data and recognizing the character information that is extracted;
extracting search subject data, which includes
converting the character information, which is recognized and which corresponds to a word that is stored in a word dictionary (10) that stores a plurality of words therein, into text,
inserting the text, which is converted, into the search subject data, and storing the search subject data in a database;
extracting a search word, which includes
extracting word, which is included in the word dictionary (10), as search word based on the text information which is the search target; and
checking the search words against the database.

FIG.1

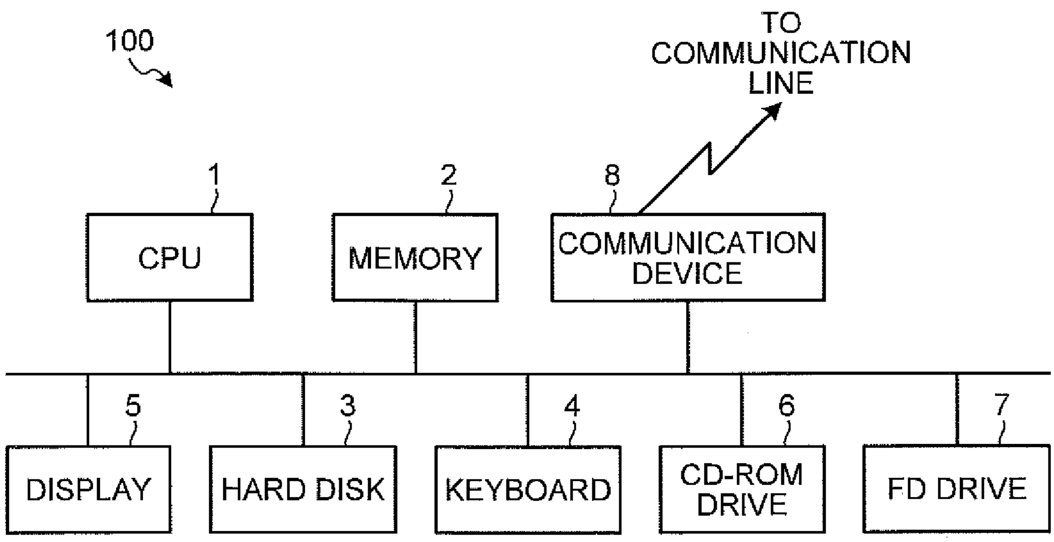
100
TO
COMMUNICATION
LINE
1
2
8
CPU
MEMORY
COMMUNICATION
DEVICE
5
3
4
6
7
DISPLAY
HARD DISK
KEYBOARD
CD-ROM
DRIVE
FD DRIVE

FIG.2

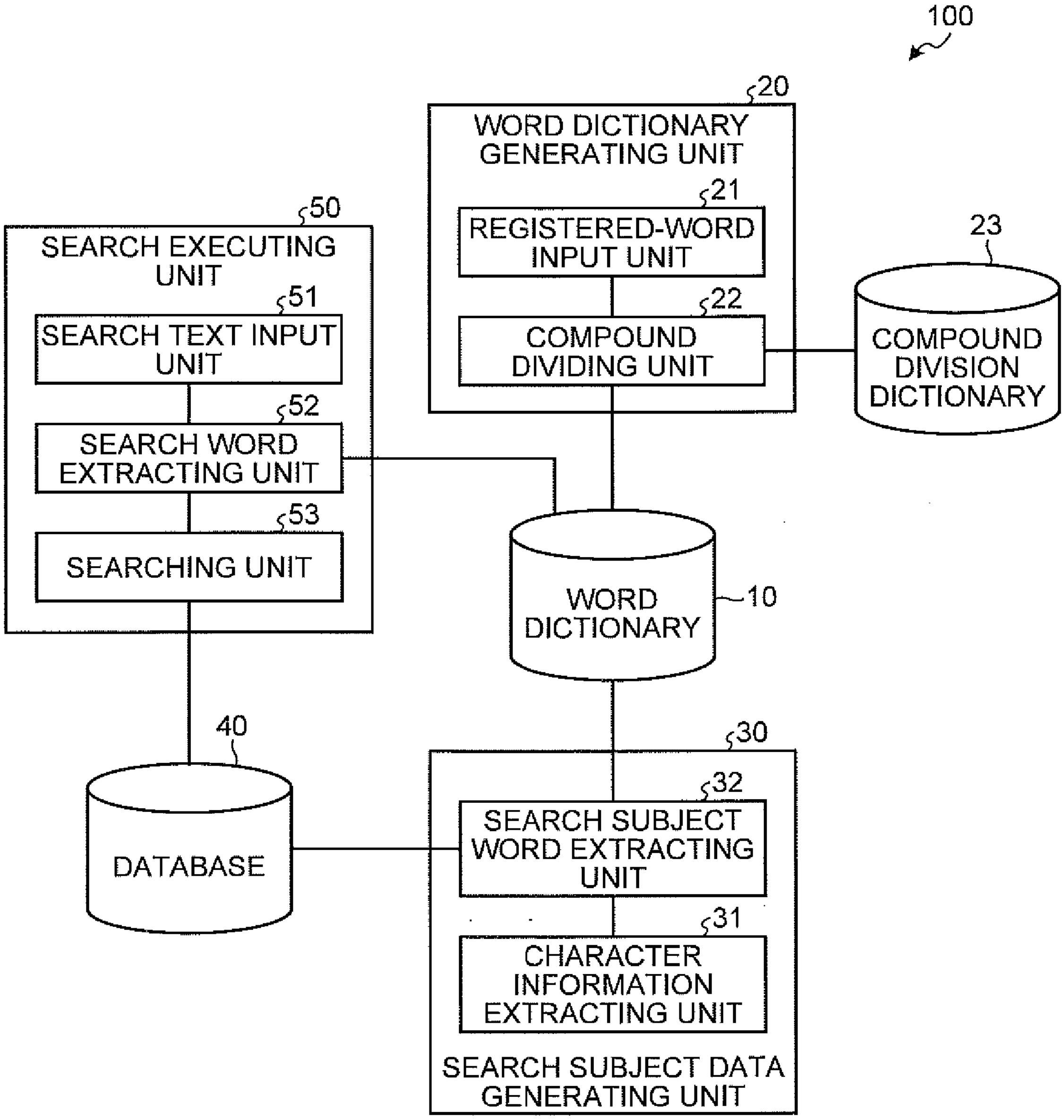
100
20
WORD DICTIONARY GENERATING UNIT
21
REGISTERED-WORD INPUT UNIT
22
COMPOUND DIVIDING UNIT
23
COMPOUND DIVISION DICTIONARY
50
SEARCH EXECUTING UNIT
51
SEARCH TEXT INPUT UNIT
52
SEARCH WORD EXTRACTING UNIT
53
SEARCHING UNIT
WORD DICTIONARY
10
40
DATABASE
30
32
SEARCH SUBJECT WORD EXTRACTING UNIT
31
CHARACTER INFORMATION EXTRACTING UNIT
SEARCH SUBJECT DATA GENERATING UNIT

FIG.3

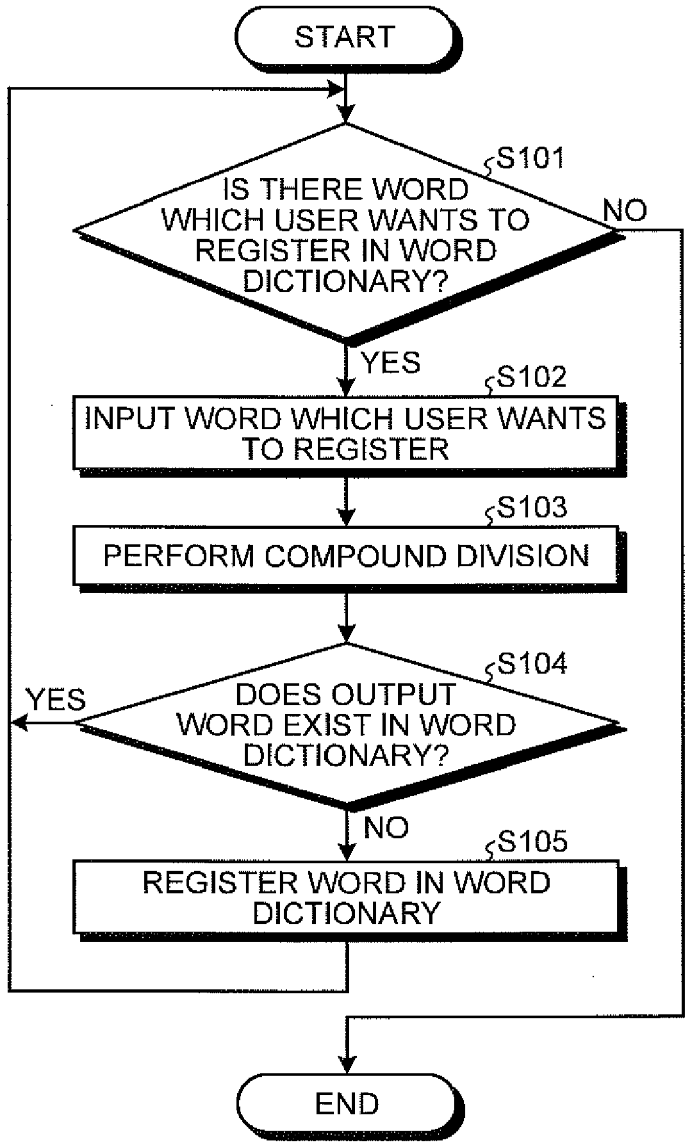
START
S101
IS THERE WORD WHICH USER WANTS TO REGISTER IN WORD DICTIONARY?
NO
YES
S102
INPUT WORD WHICH USER WANTS TO REGISTER
S103
PERFORM COMPOUND DIVISION
S104
DOES OUTPUT WORD EXIST IN WORD DICTIONARY?
YES
NO
S105
REGISTER WORD IN WORD DICTIONARY
END

FIG.4

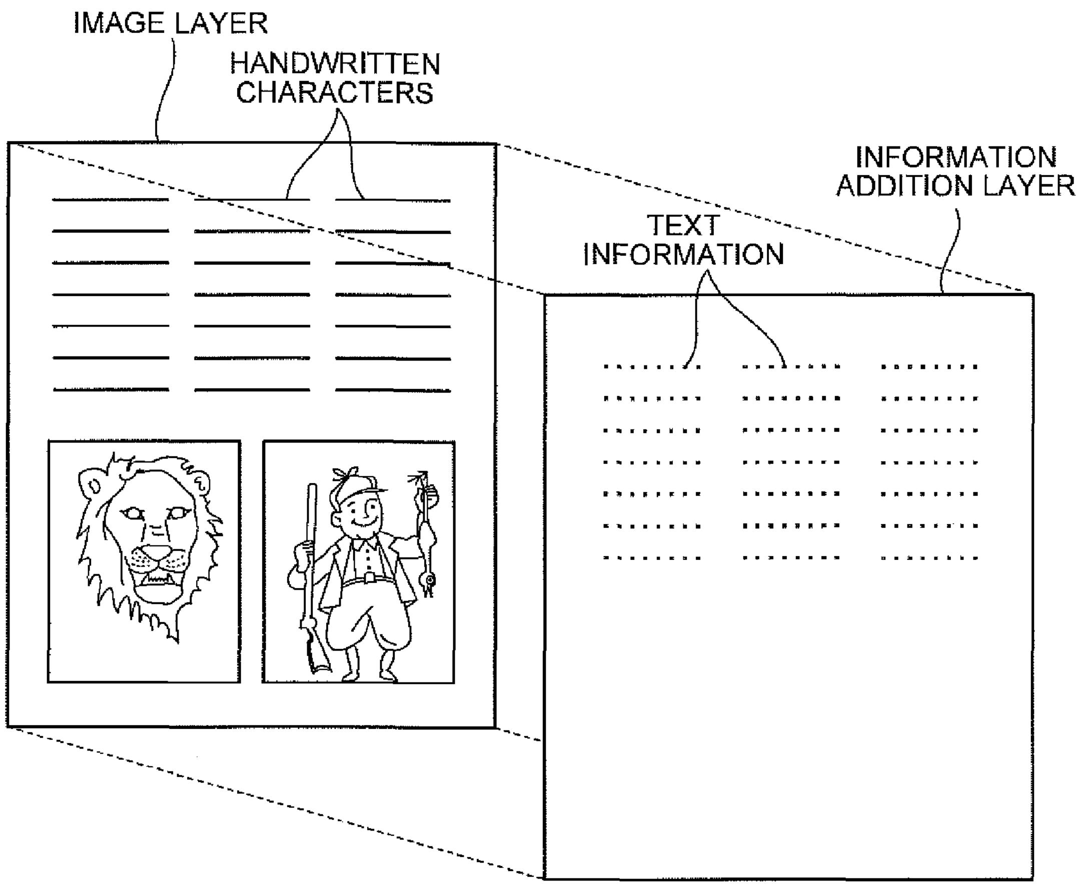
IMAGE LAYER
HANDWRITTEN CHARACTERS
INFORMATION ADDITION LAYER
TEXT INFORMATION

FIG.5

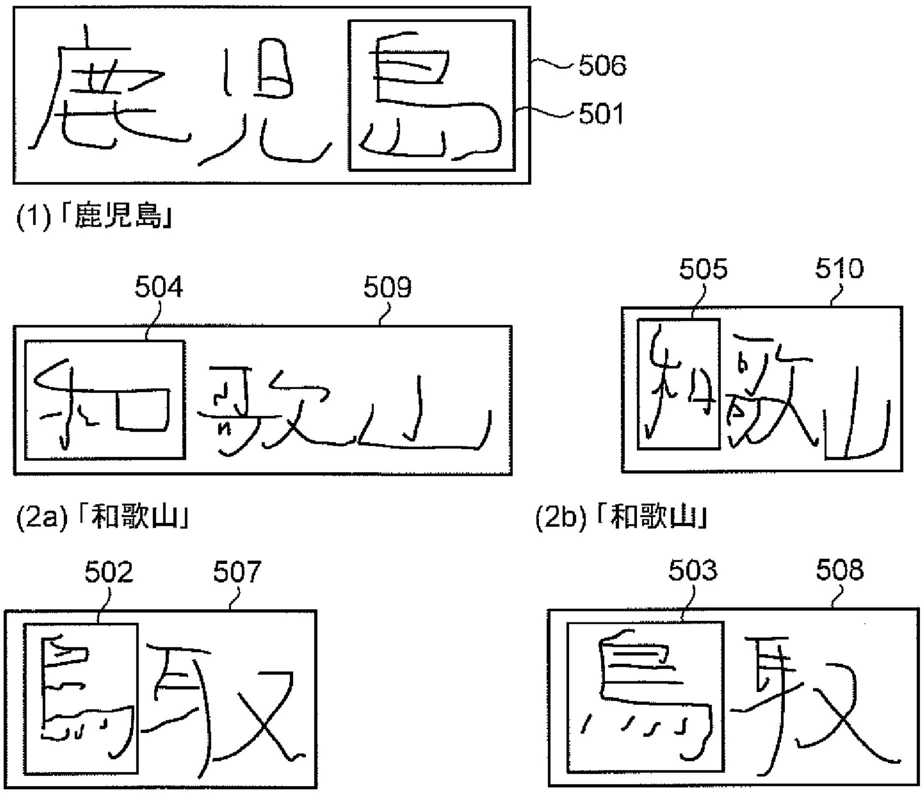


(1)「鹿児島」

(2a)「和歌山」

(2b)「和歌山」

(3a)「鳥取」

(3b)「鳥取」

FIG.6

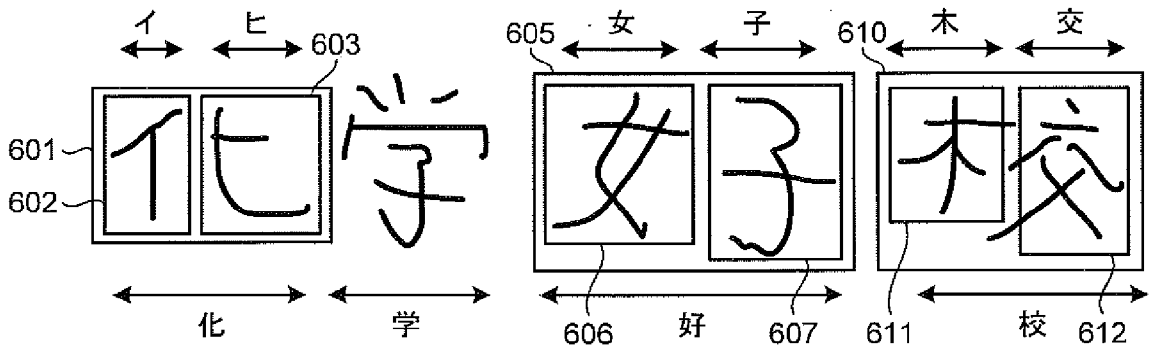

FIG.7

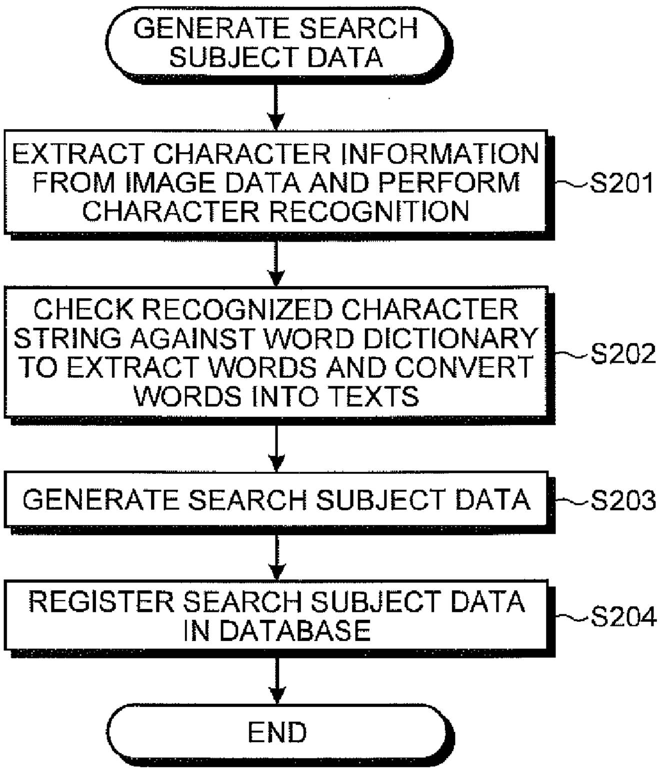
GENERATE SEARCH SUBJECT DATA
EXTRACT CHARACTER INFORMATION FROM IMAGE DATA AND PERFORM CHARACTER RECOGNITION
S201
CHECK RECOGNIZED CHARACTER STRING AGAINST WORD DICTIONARY TO EXTRACT WORDS AND CONVERT WORDS INTO TEXTS
S202
GENERATE SEARCH SUBJECT DATA
S203
REGISTER SEARCH SUBJECT DATA IN DATABASE
S204
END

FIG.8

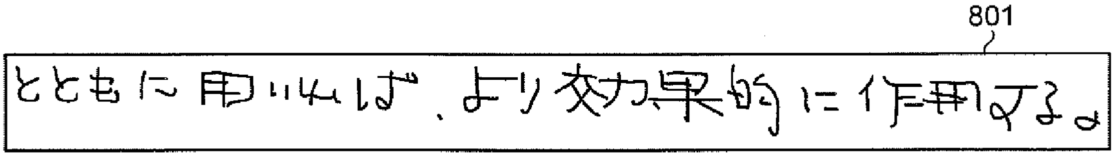
801
とともに用いれば、より効果的に作用する。

FIG.9

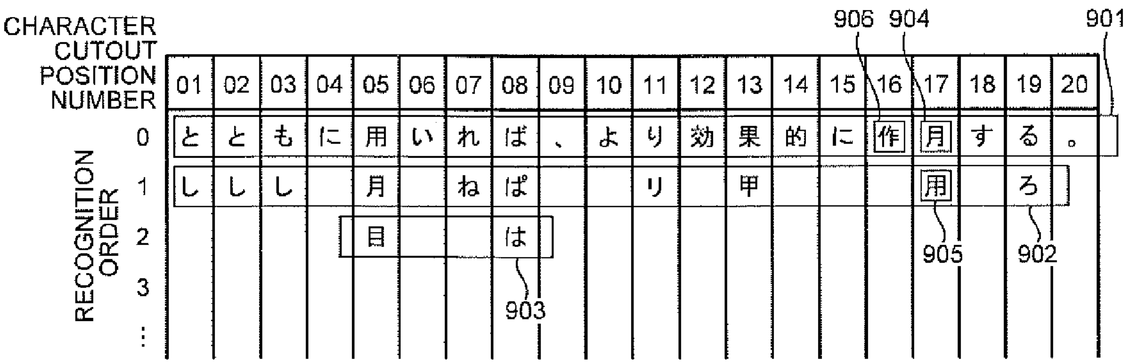
CHARACTER CUTOUT POSITION NUMBER
RECOGNITION ORDER
01 02 03 04 05 06 07 08 09 10 11 12 13 14 15 16 17 18 19 20
0 と と も に 用 い れ ば 、 よ り 効 果 的 に 作 月 す る 。
1 し し し 月 ね ぱ り 甲 用 ろ
2 目 は
3
906 904 901
905 902
903

FIG.10

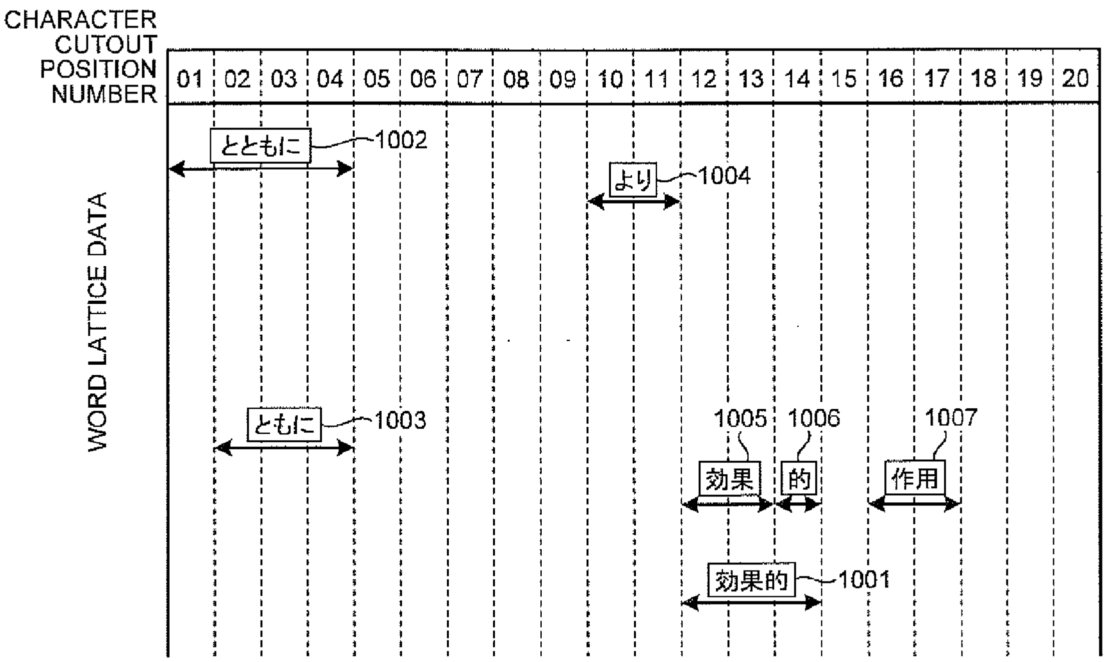
CHARACTER CUTOUT POSITION NUMBER
01 02 03 04 05 06 07 08 09 10 11 12 13 14 15 16 17 18 19 20
WORD LATTICE DATA
とともに 1002
より 1004
ともに 1003
1005 1006 1007
効果 的 作用
効果的 1001

FIG.11

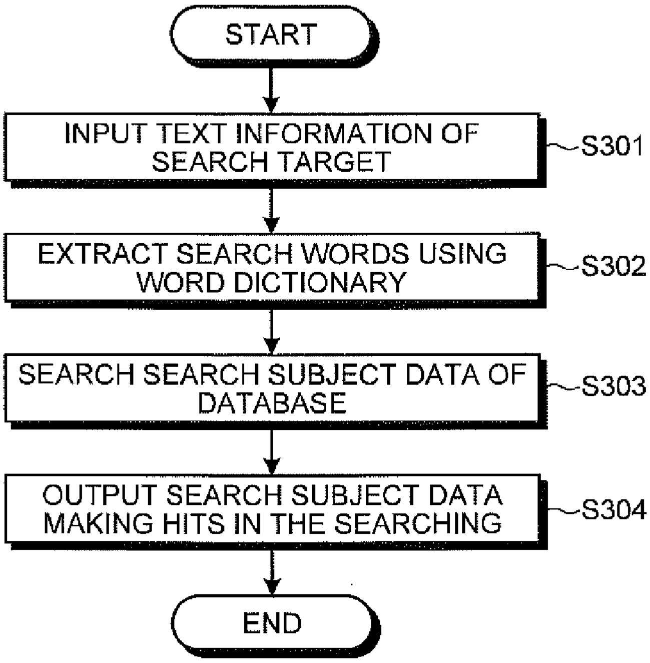


FIG.12

| WORD NOTATION | CHECK LENGTH COEFFICIENT (MINIMUM) | CHECK LENGTH COEFFICIENT (MAXIMUM) |
|---|---|---|
| English | 3 | 8 |
| テクノロジー | 3 | 8 |
| 代理 | 1 | 3 |
| かながわ | 3 | 5 |
| 南無阿弥陀仏 | 5 | 7 |
| ⋮ | ⋮ | ⋮ |

FIG.13

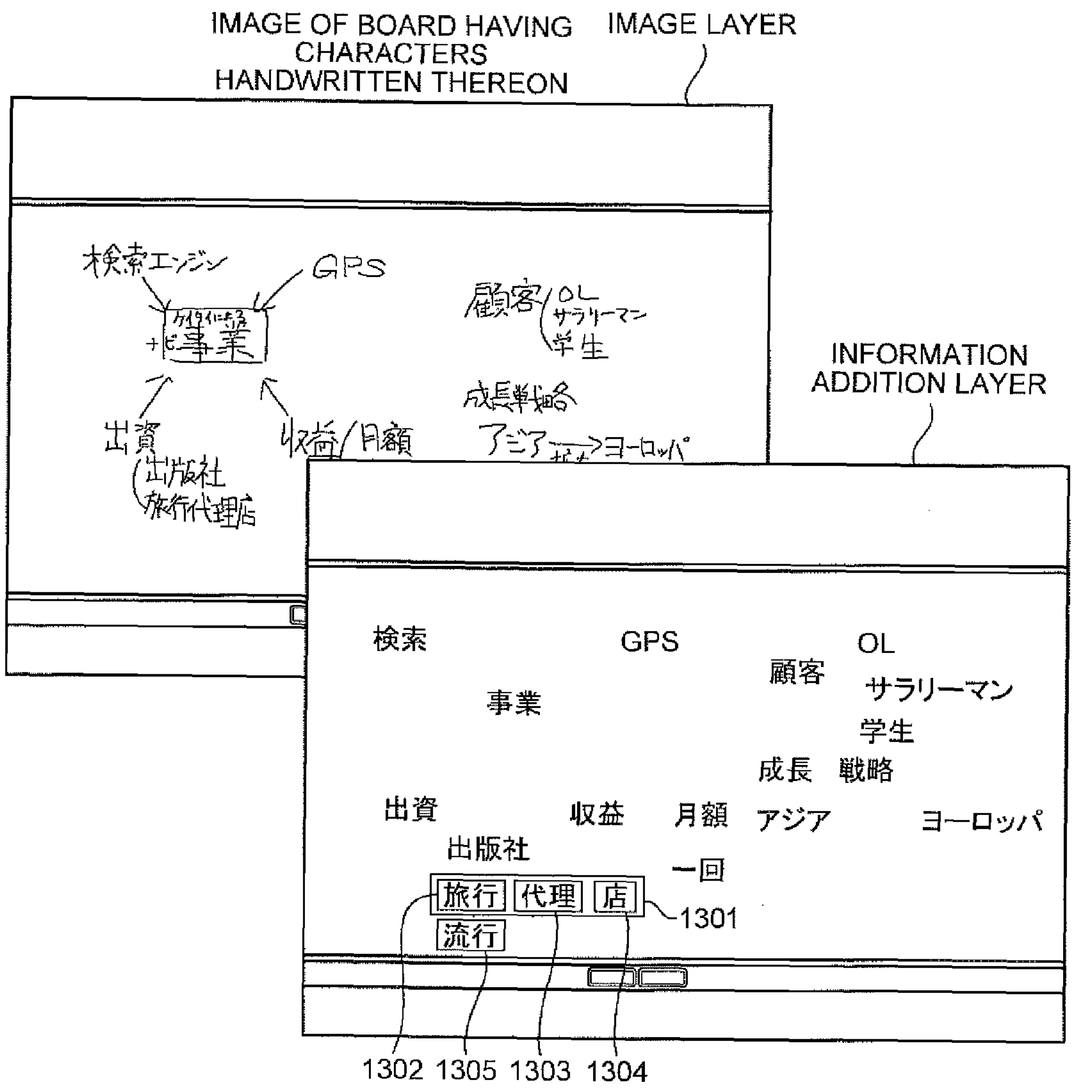
IMAGE OF BOARD HAVING CHARACTERS HANDWRITTEN THEREON
IMAGE LAYER
INFORMATION ADDITION LAYER
検索
GPS
OL
顧客
サラリーマン
事業
学生
成長 戦略
出資
収益
月額
アジア
ヨーロッパ
出版社
一回
旅行
代理
店
1301
流行
1302 1305 1303 1304

FIG.14

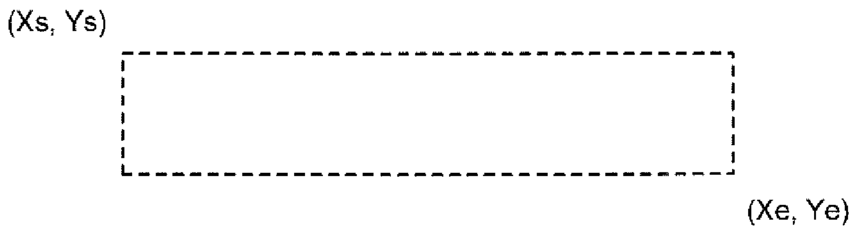
(Xs, Ys)
(Xe, Ye)

FIG.15

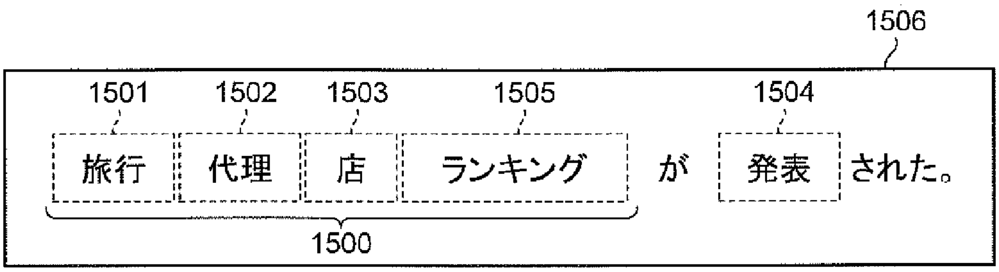
1506
1501
1502
1503
1505
1504
旅行
代理
店
ランキング
が
発表
された。
1500

FIG.16

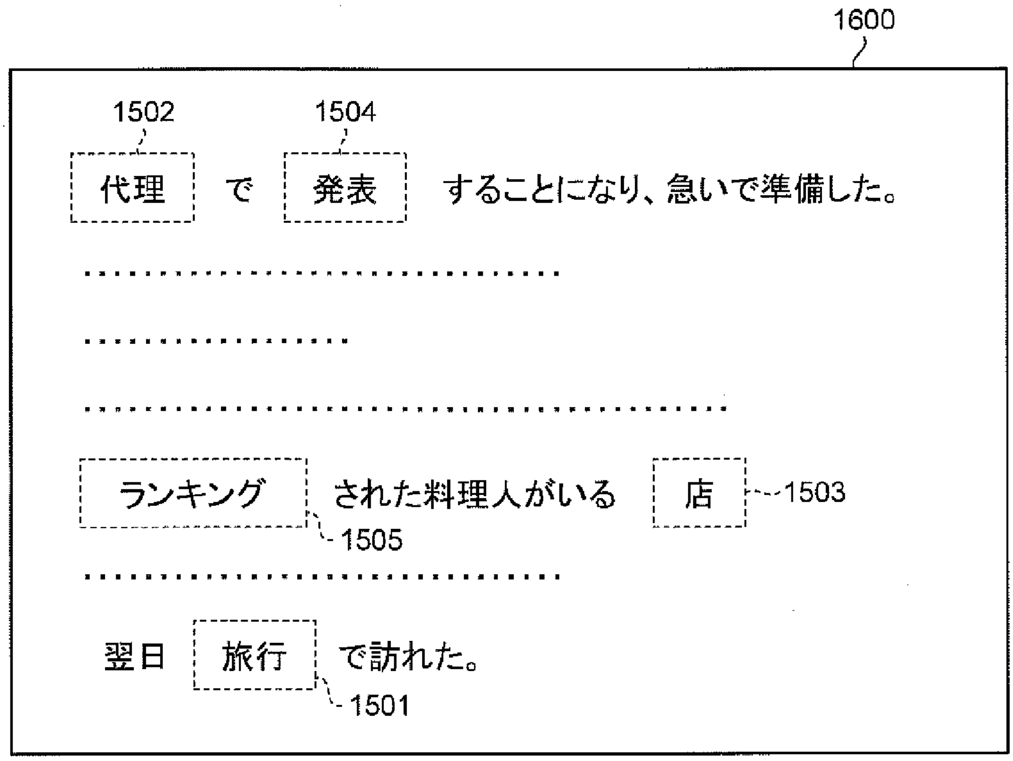
1600
1502
1504
代理
で
発表
することになり、急いで準備した。
ランキング
された料理人がいる
店
1503
1505
翌日
旅行
で訪れた。
1501

FIG.17

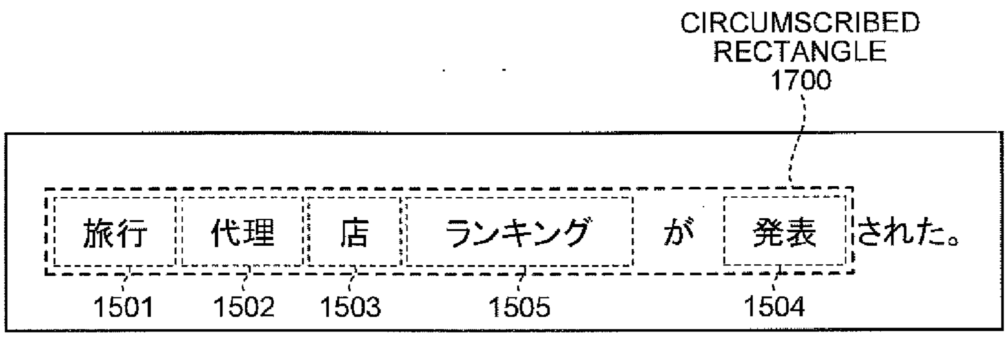
CIRCUMSCRIBED
RECTANGLE
1700
旅行
代理
店
ランキング
が
発表
された。
1501
1502
1503
1505
1504

FIG.18

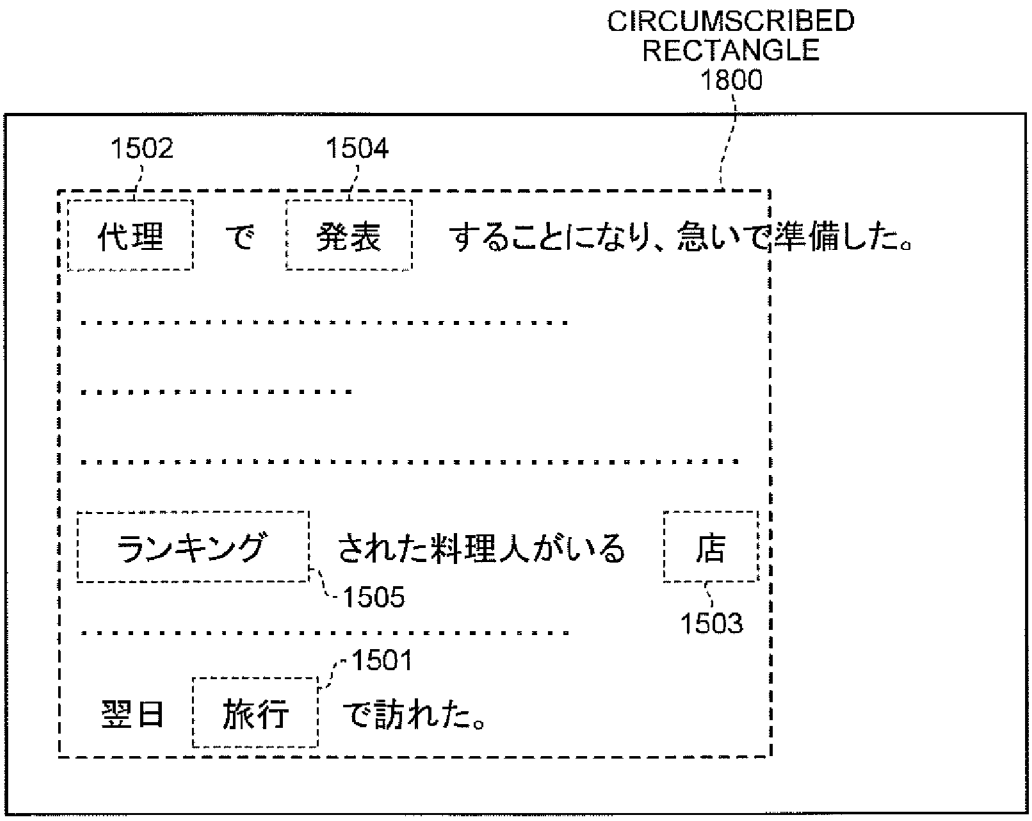
CIRCUMSCRIBED RECTANGLE
1800
1502
1504
代理
で
発表
することになり、急いで準備した。
ランキング
された料理人がいる
店
1505
1503
1501
翌日
旅行
で訪れた。

FIG.19

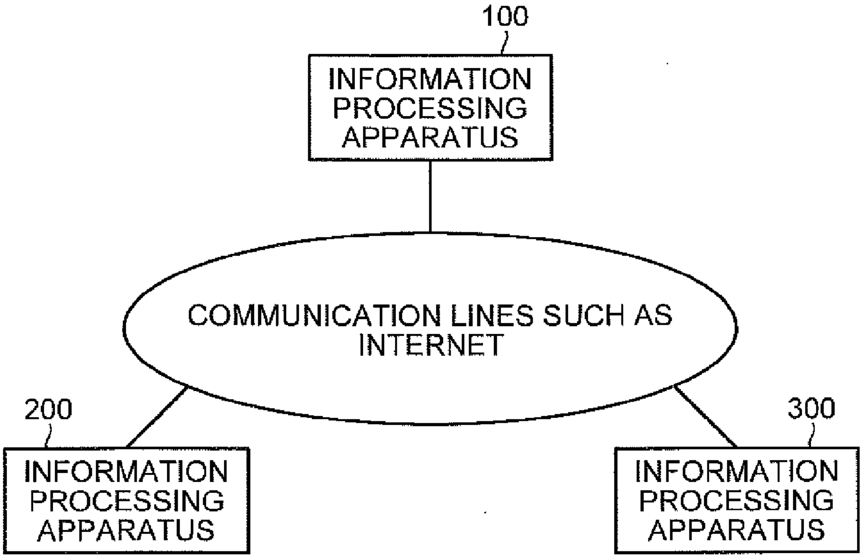
100
INFORMATION PROCESSING APPARATUS
COMMUNICATION LINES SUCH AS INTERNET
200
INFORMATION PROCESSING APPARATUS
300
INFORMATION PROCESSING APPARATUS

Europäisches Patentamt
European Patent Office
Office européen des brevets

# EUROPEAN SEARCH REPORT

Application Number
EP 11 18 1101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/005019 A1 (CANON KK [JP]; KANATSU TOMOTOSHI [JP]; ENOMOTO MAKOTO [JP]; YAMAZAKI T) 8 January 2009 (2009-01-08)<br>* paragraph [0002] *<br>* paragraph [0004] *<br>* paragraph [0052] - paragraph [0054] * | 1-10 | INV.<br>G06F17/30 |
| X | EP 0 752 673 A1 (CANON KK [JP]) 8 January 1997 (1997-01-08)<br>* the whole document * | 1-10 | |
| X | GB 2 153 560 A (HITACHI LTD) 21 August 1985 (1985-08-21)<br>* the whole document * | 1-10 | |
| X | YOSHIDA D ET AL: "Keywords Recognition of Handwritten Character String on Whiteboard Using Word Dictionary for e-Learning", HYBRID INFORMATION TECHNOLOGY, 2006. ICHIT '06, IEEE, PISCATAWAY, NJ, USA, 9 November 2006 (2006-11-09), pages 140-145, XP031260095, ISBN: 978-0-7695-2674-4<br>* sections 2 and 3, in particular sections 2.7 and 3.2 * | 1-10 | |

TECHNICAL FIELDS SEARCHED (IPC)
G06F

The present search report has been drawn up for all claims

4

| Place of search | Date of completion of the search | Examiner |
|---|---|---|
| Munich | 25 November 2011 | Eichenauer, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 11 18 1101

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2011

| Patent document cited in search report | Publication date | Patent family member(s) | Publication date |
|---|---|---|---|
| WO 2009005019 A1 | 08-01-2009 | CN 101689203 A | 31-03-2010 |
| | | EP 2162839 A1 | 17-03-2010 |
| | | JP 4590433 B2 | 01-12-2010 |
| | | JP 2009009527 A | 15-01-2009 |
| | | KR 20100033412 A | 29-03-2010 |
| | | US 2010232690 A1 | 16-09-2010 |
| | | WO 2009005019 A1 | 08-01-2009 |
| EP 0752673 A1 | 08-01-1997 | CN 1149737 A | 14-05-1997 |
| | | DE 69637025 T2 | 03-01-2008 |
| | | EP 0752673 A1 | 08-01-1997 |
| | | JP 3689455 B2 | 31-08-2005 |
| | | JP 9016619 A | 17-01-1997 |
| | | US 6310971 B1 | 30-10-2001 |
| GB 2153560 A | 21-08-1985 | CA 1216364 A1 | 06-01-1987 |
| | | GB 2153560 A | 21-08-1985 |
| | | US 4736296 A | 05-04-1988 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008181485 A
- JP 8137895 A
- JP 2002278579 A
- JP 10055371 A


### Non-patent literature cited in the description


- Word Spotting Speech Recognition. *Journal of Japan Society for Fuzzy Theory,* 1999, vol. 11 (3), 403-407